(19) Europäisches Patentamt

European Patent Office

Office européen des brevets

(11) Publication number: **0 238 197**
**A2**

## (12) EUROPEAN PATENT APPLICATION

(21) Application number: 87301253.8

(22) Date of filing: 13.02.87

(51) Int. Cl.³: **C 08 L 101/00**

(30) Priority: 14.02.86 US 829573

(43) Date of publication of application:
23.09.87 Bulletin 87/39

(84) Designated Contracting States:
AT BE CH DE ES FR GB IT LI NL SE

(71) Applicant: E.I. DU PONT DE NEMOURS AND COMPANY
1007 Market Street
Wilmington Delaware 19898(US)

(72) Inventor: Subramanian, Pallatheri Manackal
110 Cameron drive
Hockessin Delaware 19707(US)

(74) Representative: Jones, Alan John et al,
CARPMAELS & RANSFORD 43 Bloomsbury Square
London, WC1A 2RA(GB)

(54) Novel polymer barrier blends.

(57) Polymer blends with barrier properties having low organic liquid and vapor permeability are obtained by blending an organic liquid and vapor-permeable polymer with an organic liquid and vapor barrier polymer in a 75:40 to 25:60 weight ratio to form a discrete dispersion of the polymers in each other and causing the organic liquid and vapor-permeable polymer to undergo branching or a limited amount of crosslinking with an increase of viscosity sufficient to cause the polymers to separate into distinct phases composed of larger particles.

F I G. 2

# TITLE
## NOVEL POLYMER BARRIER BLENDS

### FIELD OF THE INVENTION

This invention relates to barrier blends of polymers, particularly to blends having greatly reduced organic liquid and vapor permeability, in which a polymer constituting the organic liquid and vapor barrier is dispersed in a permeable polymer in such a way that the barrier polymer forms relatively large, disc-like particles, or even netlike structures.

### BACKGROUND OF THE INVENTION

U.S. Patent 4,410,482 describes heterogeneous laminar dispersions of a polyamide in a polyolefin matrix, containing a compatibilizer, which have very good hydrocarbon barrier properties. Those blends are prepared by melt processing the blend compounds under carefully controlled conditions. Care must be taken in such extrusions to avoid high energy, high shear mixing equipment or techniques, which however are standard in ordinary polymer blending operations.

It would be desirable to be able to produce polymer blends having good gas and solvent barrier properties in standard equipment, using standard techniques. However, the usual processes produce under those conditions homogeneous polymer blends, which do not have good barrier properties.

### SUMMARY OF THE INVENTION

According to the present invention, there is provided a process for producing a multiphase dispersion of an organic liquid and vapor barrier polymer in a permeable polymer, both polymers having compatible functional groups such that the polymers can initially form a discrete dispersion in one

AD-5405

another without substantially reacting and crosslinking;

said process consisting in blending said polymers in a weight ratio of about 25 to 60% of gas and solvent barrier polymer and 75 to 40% of permeable polymer and causing the permeable polymer to undergo branching or limited amount of crosslinking, with an increase of viscosity sufficient to cause both polymers to form distinct, separate, phases composed of larger particles, the resulting blend having improved organic liquid and vapor barrier properties.

There also is provided a multiphase polymer blend having low organic liquid and vapor permeability consisting essentially of about 25 to 60% of an organic liquid and vapor barrier polymer and 75 to 40% of a permeable polymer, wherein the polymers form distinct, separate phases, and the organic liquid and vapor permeable polymer is branched or partially crosslinked.

## BRIEF DESCRIPTION OF THE DRAWINGS

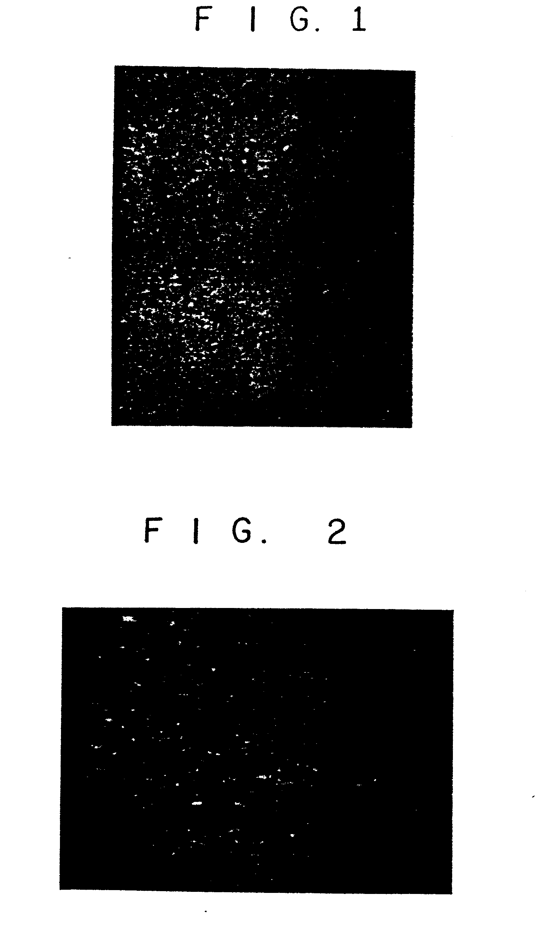

Figs. 1 and 2 are microphotographs of two blends of an organic liquid and vapor permeable polymer with a barrier polymer.

## DETAILED DESCRIPTION OF THE INVENTION

Definition: For the purpose of the present disclosure and claims, an "organic liquid" is a liquid of the type generally employed as an industrial solvent or vehicle, including, e.g., hydrocarbons, ketones, alcohols, ethers, esters, halogenated hydrocarbons, etc. The organic liquid should not attack the polymer blend. Representative organic liquids are xylene, toluene, and tetrachloroethane. "Vapor" is a vapor of an organic liquid, as defined above.

The organic liquid and vapor permeable polymer will usually be a hydrocarbon type polymer such as, for example, a polymer of an α-olefin or of styrene, but most conveniently it will be a polymer of ethylene. Such a polymer should have pendant functional groups capable of providing some compatibility with the organic liquid and vapor barrier polymer, which normally will have functional polar groups. Typically, suitable pendant groups that can be present in the permeable polymer include, for example, carboxyl, ester, anhydride, epoxide, hydroxyl, etc.

The organic liquid and vapor barrier polymer can be, for example, a polyamide, a polyester, polyvinyl chloride, polyvinylidene chloride, an ethylene/vinyl alcohol copolymer, a polyketone, polyacrylonitrile, etc.

Ethylene-vinyl alcohol copolymers, especially those in which the proportion of ethylene is less than 50% by weight, while being ethylene copolymers and containing hydroxyl groups, are classified for the purpose of the present invention as organic liquid and vapor barrier, rather than permeable, polymers.

Generally speaking, the functional groups on the organic liquid and vapor barrier polymer and on the organic liquid and vapor permeable polymer should not be the same.

The barrier polymer preferably is a polyamide, for example, poly(hexamethylene adipamide) or poly(ε-caprolactam), or a polyester, for example, poly(ethylene terephthalate) or poly(tetramethylene terephthalate).

The permeable polymer preferably is a copolymer of ethylene. In the context of the present disclosure, the term "copolymer" means that in addition to ethylene, there is at least one more monomer incorporated into the polymer molecule. A copolymer thus can be a dipolymer, but it also can be a terpolymer or a tetrapolymer. A suitable comonomer containing the carboxyl group can be, for example, acrylic acid, methacrylic acid, or fumaric acid. Ester group-terminated comonomers include, among others, methyl acrylate, methyl methacrylate, ethyl acrylate, n-butyl and isobutyl acrylate, diethyl maleate, and dimethyl fumarate. Maleic anhydride is the most practical anhydride group-containing monomer. Other suitable comonomers include, for example, acrylonitrile, carbon monoxide, and vinyl acetate.

The organic liquid and vapor permeable polymer may itself be a blend of a functional group containing copolymer, such as described above, with a hydrocarbon polymer such, e.g., as polyethylene, copolymers of ethylene with α-olefins, and copolymers and terpolymers of ethylene with a diene or an α-olefin and a diene. The amount of such hydrocarbon polymer can be up to about 50% by weight of the total permeable polymer weight.

Both the barrier polymers and the permeable polymers should be high molecular weight, solid materials having either elastomeric or plastic properties. Branching or limited crosslinking of the organic liquid and vapor permeable polymers is obtained either by blending the polymers in the presence of a coupling agent or by exposing the blend to high energy radiation.

The coupling agent can be a free radical generator, such as a peroxide, a peroxy acid, a peroxy ester, or azo compounds (such as, e.g.,

azobisisobutyronitrile), all of wich are well known to the polymer chemist. Representative peroxy compounds include, for example, dicumyl peroxide and α,α'-bis(t-butyl peroxy) diisopropylbenzene. Other suitable coupling agents may be the conventional curing or vulcanizing agents known for curing polymers having reactive groups. Thus, for example, sulfur and various polysulfides can be used for crosslinking copolymers having curable double bonds, such, for example, as an ethylene/butadiene/maleic anhydride terpolymer. Other suitable curing agents for specific classes of polymers include, for example, diamines, which react with carboxyl, ester, and anhydride groups; and diepoxides, which react with carboxyl and hydroxyl groups. Under proper conditions, diamines also crosslink carbonyl group-containing polymers such as, for example, ethylene/carbon monoxide/vinyl acetate copolymers.

The amount of the coupling agent in the polymer blend of the present invention will depend on the type of curable polymer and the type of coupling agent used. For a peroxide, or other peroxy compound, that amount normally will be about 0.01 to 1 part by weight, based on 100 parts of the total polymer. For sulfur and polysulfides, the amount will be about 1 to 5 parts; and for crosslinking agents such as diepoxides and diamines it also will be about 1 to 5 parts.

Instead of branching or crosslinking by means of coupling agents, the blend may be subjected to high energy radiation, such as, for example, ultraviolet, x-rays, or a high energy electron beam. When this route is chosen, coupling agents are not present in the blend at any stage, but sensitizers (e.g., benzophenone) may be added to accelerate crosslinking reactions; the blended material is extruded and pelletized or formed into some other convenient shape and then irradiated. Radiation treatment may sometimes be more practical than chemical treatment in that it avoids premature crosslinking during blending, which could lead to high gel levels and thus to processing difficulties.

Fillers normally are not desirable because their presence increases organic liquid and vapor permeability, unless their surface adhesion and porosities are closely controlled. Yet, small amounts of fillers such as, _e.g._, pigments, carbon black, talc, or calcium carbonate, up to about 10% of the total polymer weight, can be tolerated. Fillers should be finely ground to minimize the possible adverse effect of those additives on the barrier properties of the blend.

When using coupling agents, blending of the components according to the present invention is best accomplished in an extruder at a temperature at which branching or partial crosslinking of the hydrocarbon-permeable polymer can take place. Usually, the suitable temperature range will be about 100-300°C. The blending conditions should be adjusted so that extensive crosslinking does not take place. Effective control can be obtained by operating at the lowest practical temperature and/or at a fast throughput or with short residence times. Suitable blending conditions can be easily established by making two or three trial runs in the same equipment and determining the amount of crosslinking, by known techniques, for example, by determining or estimating the decrease of the melt index or increase of the melt viscosity of the polymer blend as a result of crosslinking. Melt flow is determined according to ASTM-1238. Melt viscosity is determined by using a constant stress capillary rheometer. Satisfactory crosslinking reduces the melt index or increases the melt viscosity of the polymer blend to an extent which produces the desired effect without impeding blending or fabricating of the composition. A qualitative estimate of the degree of crosslinking can be made by observing the melt strength of a parison blow-molded from the polymer blend compositions. Lower melt index or higher melt viscosity results in increased melt strength.

A polymer blend of the present invention in which the organic liquid and vapor permeable polymer is branched or partially crosslinked theoretically could be made by blending a branched or partially crosslinked organic liquid and vapor permeable polymer with a barrier polymer, rather than branching or crosslinking in situ. This, however, is not a practical way of making polymer blends having good organic liquid and vapor barrier properties because the viscosity of such blends normally would be too high for obtaining a good, uniform dispersion of one polymer in the other; and, further, it is not sure that the barrier polymer would form particles of proper size and shape to impart to the blend good organic liquid and vapor barrier properties.

Conventional extruders can be used for blending the components according to the present invention, for example, single screw or twin screw extruders, which preferably are maintained at a low temperature in the feed area, the temperature gradually rising towards the extrusion die. Other suitable blending equipment includes, for example, roll mills and internal mixers.

Referring to the Drawings, Fig. 1 shows a cross-section of the wall of a test cup molded from a blend containing 50 parts of nylon 66 with 35 parts of polyethylene and 15 parts by weight of an anhydride-modified polyethylene, which serves as a compatibilizer or "emulsifier", in the absence of a coupling agent. This microphotograph shows a uniform, finely dispersed blend of two types of materials (distinguished from each other as dark and light areas, respectively). This blend has poor barrier properties. Fig. 2 is a microphotograph of a similar cross-section of a test-cup made from a blend of 40 parts of a nylon 66 and nylon 6 copolymer in a weight ratio of 77.5:22.5 with 60 parts by weight of an ethylene/methacrylic acid copolymer (96:4), in the presence of 0.25 parts per 100 of $\alpha,\alpha'$-bis($\underline{t}$-butyl peroxy)diisopropylbenzene (Vulcup® 40KE, available from Hercules Co.) coupling agent. This figure shows the structure of the blend which appears as two distinct phases. The lighter phase is believed to be the permeable polymer.

It must be kept in mind that these microphotographs can be regarded only as typical but not necessarily as reliable or definite representations of, respectively, uncrosslinked and partially crosslinked polymer compositions, as discussed above.

This invention is now illustrated by the following examples of certain representative embodiments thereof, where all parts, proportions, and percentages are by weight unless otherwise indicated.

Melt viscosities were determined using a constant stress capillary rheometer made by Monsanto Company, Akron, Ohio, and equipped with a capillary of 0.0775 cm diameter and 1.575 cm length.

## EXAMPLE 1 (Comparative)

Pellets of a 96% ethylene/4% methacrylic acid (E/MAA) copolymer (melt index = 1) were mixed with pellets of commercial polycaprolactam (Capron© 8207, Allied Chemical Co.) in the respective ratio of 70:30. These polymers were melt-blended in a 28 mm Werner Pfleiderer twin-screw extruder, stranded, and pelletized. The pellets were pressed into about 0.05 mm-thick films, which were cut into 7.5 cm diameter circles and sealed as lids on top of a test cup containing xylene. Xylene permeation at room temperature was determined by the weight loss.

## EXAMPLE 2

The procedure of Example 1 was repeated exactly, except that 0.1 part of dicumyl peroxide per 100 parts of total polymer was added during melt-compounding. Films were pressed and the xylene permeability was determined as in Example 1.

## EXAMPLE 3

The procedure of Example 2 was repeated, except that the amount of dicumyl peroxide was increased to 0.3 part per 100 parts of total polymer. Table I, below, provides permeability data for Examples 1-3:

### TABLE I

| Example | Peroxide | Hrs. tested | Xylene loss, g at room temp. |
|---------|----------|-------------|------------------------------|
| 1 | - | 304 | 6.22 |
| 2 | 0.1 | 295 | 3.41 |
| 3 | 0.3 | 295 | 0.217 |

The above data show that xylene permeability decreases by 45% when 0.1% of peroxide is present and then dramatically decreases further, to 3.5% of the original value when the amount of peroxide is increased to 0.3%.

## EXAMPLES 4-12

The same general procedure was used, retaining the same E/MAA copolymer but varying the polyamide component. The E/MAA copolymer to polyamide ratio was in all runs 70:30. For each polyamide, one run without a peroxide and two runs with two different levels of peroxide were made. The results are given below in Table II.

TABLE II

0238197

| Example | Poly-amide[1] | Peroxide[2], pts. per 100 pts. of polymer | No. of Hrs. | Room Temp. weight loss of xylene,g[3] |
|---------|---------------|--------------------------------------------|-------------|----------------------------------------|
| 4 | A | – | 295 | 1.68 |
| 5 | A | 0.1 | 295 | 0.13[4] |
| 6 | A | 0.3 | 186 | 0.377 |
| 7 | B | – | 186 | 4.95 |
| 8 | B | 0.1 | 186 | 4.23 |
| 9 | B | 0.3 | 186 | 2.51 |
| 10 | C | – | 186 | 2.91 |
| 11 | C | 0.1 | 186 | 0.06 |
| 12 | C | 0.3 | 186 | 1.26[5] |

[1]  A=77.5:22.5 copolyamide of nylon 66 and nylon 6,
      having a number average molecular weight,
      Mn=16,000;
     B=77.5:22.5 copolyamide of nylon 66 and nylon 6,
      having a Mn=30,000;
     C=nylon 66, having
      a Mn=18,000.
[2] Dicumyl peroxide (40% active)
[3] Average of 3 samples
[4] Gel present, one sample value 0.05
[5] Large amount of gel present.

12    0238197

The above examples clearly show the general permeability decrease on addition of peroxide. Where the amount of peroxide is so high that a substantial amount of gel is formed, the test samples have an uneven thickness and give nonuniform test results. Nevertheless, the general improvement can be seen.

<u>EXAMPLES 13-17</u>

In these examples, polymer blends were prepared by melt compounding the ethylene copolymer and polyamide in the presence of peroxide and pelletizing the blend. The pellets were then blow-molded into 4 oz. (118 mL) bottles, using a Rocheleau extrusion blow-molding machine. The bottles were partially filled with xylene and tested for permeability. The results are given in Table III:

TABLE III

| Example | Ethylene[1] Copolymer | Nylon[2] 6 | Per-oxide[3] | Xylene Permeability at 60°C | |
|---|---|---|---|---|---|
| | | | | Tot. Hrs. Exposed | Tot. Loss, g |
| 13 | 60 | 40 | - | 433 | 79 |
| 14 | 60 | 40 | 0.1 | 433 | 0.37 |
| 15 | 60 | 40 | 0.2 | 433 | 6.54 |
| 16 | 50 | 50 | - | 433 | 0.45 |
| 17 | 50 | 50 | 0.1 | 433 | 0.3 |

[1] E/MAA copolymer (96:4, melt index = 0.9)
[2] Capron® 8207 (Allied Chemicals) poly(ε-caprolactam)
[3] Dicumyl peroxide (40% active)
[4] Container with rough surface and nominal wall thickness; gel present

13

Again, xylene permeability reduction is seen in all cases where peroxide was used in the melt-blending step.

## EXAMPLES 18 AND 19

These examples show that the enhanced barrier properties obtained according to the process of this invention are also observed for ternary polymer blends, rather than only binary blends. The details are given in Table IV. The experimental procedure was the same as in Examples 13-17, but xylene loss was measured at room temperature.

TABLE IV

**0238197**

| Example | Ethylene Copolymer A) | Poly- amide B) | Poly- olefin C) | Peroxide D) | Xylene Permeability | |
|---------|---|---|---|---|---|---|
| | | | | | Hrs. | Loss, g |
| 18 | 40 | 40 | 20 | | 1560 | 29.4 |
| 19 | 40 | 40 | 20 | 0.1 | 1560 | 0.83 |

A) E/MAA copolymer (96:4, melt index = 1)
B) Polycaprolactam (nylon 6, Mn=21,000)
C) Linear, high density polyethylene, Marlex® 5202
   (Phillips Petroleum)
D) Dicumyl peroxide (40% active)

It can be seen that the effect of 0.1% of peroxide on the improvement of barrier properties is dramatic.

### EXAMPLE 20 (Comparative)

A 40:60 melt blend of polyethylene terephthalate (melt index = 0.7) and ethylene/methacrylic acid copolymer (4% methacrylic acid; melt index = 1) was prepared by extrusion blending using a Werner and Pfleiderer 28 mm, twin screw extruder. Granules of this blend were then blow molded, with difficulty, into 4 oz. (118 mL) bottles, using an extrusion blow molding machine made by Rocheleau Tool and Die Company.

These bottles were subsequently filled with xylene and then tested for permeability, by weight loss, at room temperature (23°C). Average loss (based on 3 samples) was 16.4 g in 387 hours (1.02 g/24 hrs.).

### EXAMPLE 21

A blend similar to that of Example 20 was prepared by melt blending, but with the incorporation of 0.125 part per 100 parts of the blend of $\alpha,\alpha'$-bis(t-butylperoxy)-diisopropylbenzene supported on clay, 40% active, corresponding to 0.05 part of active peroxide per 100 parts of polymer blend. Bottles (118 mL) were extrusion blown from these pellets as described in Example 20. This blend could be processed easily, as opposed to the previous blend.

Xylene permeability tests, as above, showed a loss of 1.13 g (average of 3 samples) in 387 hours (0.07 g/24 hours).

### EXAMPLE 22

A blend similar to that of Example 20 was prepared, but this time it contained 1 part of a diepoxy resin, EPON 1009 (Shell Chemical Co.) per 100

0238197

parts of polymers. This was further processed into containers and tested as before and found to have an average xylene loss of 0.2 g (2 samples) during 601 hours of testing (0.008 g/24 hours).

### EXAMPLE 23 (Comparative)

A 50:50 melt blend of the same polyethylene terephalate and ethylene-methacrylic acid copolymer was made as described above, blow-molded, and tested for xylene permeability. The tests showed an average loss of 0.4 g during 747 hours at 23°C (0.013 g/24 hours).

### EXAMPLE 24

A melt blend similar to that of Example 23 was prepared, with the exception that it contained 2 parts/100 parts of polymers of diepoxy resin, EPON 1009 (Shell Chemicals). Containers blow molded from this blend lost about 0.01 g of xylene during 948 hours of testing at 23°C.

### EXAMPLE 25

A 50:50 melt blend of polyethylene terephthalate and ethylene/methacrylic acid copolymer similar to that of Example 20 was melt extruded into a sheet about 0.05 mm thick. This sheet was tested for xylene permeability by using it as a lid in an aluminum cup. During 337 hours of tests at 23°C, an average loss of 3.15 g (0.224 g/24 hours) was obtained.

### EXAMPLE 26

Polymer blend pellets similar to those of Example 20 were irradiated with high energy electrons using a Van de Graaff generator with a dose of 0.5 Mrads. These pellets were then extruded into sheets and tested for permeability as in Example 25. The permeability loss during 481 hours at 23°C was 0.15 g (average of 3 samples) or 0.0075 g/24 hours.

0238197

## Example 27

Blends of polyethylene terephthalate with an E/MAA copolymer and of nylon 66 with the same E/MAA copolymer, in the absence and in the presence of varying amounts of a peroxide were prepared and processed as described in Examples 1 through 3. Melt viscosity of those blends was determined at 280°C. The results are given below in Table V.

TABLE V

| Run | PET[1] | E/MAA Copolymer[2] | Nylon 66[3] | Peroxide[4] | Melt Viscosity Pa.sec |
|-----|-----|-----|-----|-----|-----|
| 1 | 50 | 50 | | | 200.3 |
| 2 | 50 | 50 | | 0.15 | 237.3 |
| 3 | 50 | 50 | | 0.25 | 280.4 |
| 4 | 50 | 50 | | 0.50 | 379.6 |
| 5 | 50 | 50 | | 0.75 | 483.97 |
| 6 | | 50 | 50 | | 157.8 |
| 7 | | 50 | 50 | 0.15 | 192.8 |
| 8 | | 50 | 50 | 0.25 | 222.4 |
| 9 | | 50 | 50 | 0.50 | 258.14 |

1 Polyethylene terephthalate, Goodyear Cleartuf® 7202

2 ethylene/methacrylic acid copolymer (4%), melt index = 0.8

3 Zytel® 101 Du Pont

4 DiCup® 40KE, Dicumyl peroxide, 40% on clay, Hercules.

Example 27 shows that increasing amounts of peroxide increase blend melt viscosity at 280°C, which is indicative of branching or limited crosslinking of the E/MAA copolymer.

CLAIMS;                                          0238197

1. A process for producing a multiphase dispersion of high molecular weight solid polymers having either elastomeric or plastic properties consisting of an organic liquid and vapor barrier polymer dispersed in an organic liquid and vapor permeable polymer, both polymers having compatible functional groups such that the polymers can initially form a discrete dispersion in one another without substantially reacting and crosslinking;

said process comprising blending said polymers in a weight ratio of about 25 to 60% of organic liquid and vapor barrier polymer and 75 to 40% of organic liquid and vapor permeable polymer and causing the permeable polymer to undergo branching or limited amount of crosslinking with an increase of viscosity sufficient to cause both polymers to form distinct, separate phases composed of larger particles, the resulting blend having improved organic liquid and vapor barrier properties.

2. A process of Claim 1 wherein the organic liquid and vapor permeable polymer has pendant groups belonging to one or more types selected from carboxyl, ester, anhydride, epoxide, and hydroxyl.

3. A process of Claim 1/wherein the
   _or Claim 2_
organic liquid and vapor barrier polymer is selected from polyamides, polyesters, polyvinyl chloride, polyvinylidene chloride, ethylene/vinyl alcohol copolymers containing less than about 50% by weight of ethylene, polyketones and polyacrylonitrile.

4. A process of Claim 3 wherein the organic liquid and vapor barrier polymer is a polyamide or a polyester.

5. A process of Claim 4 wherein the organic liquid and vapor barrier polymer is selected from the group consisting of poly(hexamethylene adipamide), poly(ε-caprolactam), and blends thereof; and poly(ethylene terephthalate), poly(tetramethylene terephthalate), and blends thereof.

6. A process of/Claims 1/wherein branching  any one of        to 5
or crosslinking is obtained by blending the polymers in the presence of a coupling agent.

7. A process of Claim 6 wherein the coupling agent is selected from free radical generators and vulcanizing agents for curing polymers having functional groups.

8. A process of Claim 7 wherein the coupling agent is selected from peroxides, peroxyacids, peroxyesters, and azo compounds.

9. A process of Claim 7 wherein the coupling agent is sulfur, a polysulfide, a diamine, or a diepoxide.

10. A process of/Claims 1/wherein branching  any one of        to 5
or crosslinking is obtained by exposing the polymer blend to high energy radiation.

11. A multiphase polymer blend having low organic liquid and vapor permeability, said blend consisting essentially of about 25-60% by weight of an organic liquid and vapor barrier polymer and 75-40% by weight of an organic liquid and vapor permeable polymer, wherein the polymers form distinct, separate phases, and the organic liquid and vapor permeable polymer is branched or, to a limited degree, crosslinked.

12. A blend of Claim 11 wherein the organic liquid and vapor-permeable polymer is an ethylene copolymer selected from copolymers of ethylene with at least one monomer selected from unsaturated carboxylic acids, unsaturated esters, acrylonitrile, carbon monoxide, and vinyl acetate.

13.  A blend of Claim 11/wherein the [or 12] organic liquid and vapor barrier polymer is selected from polyamides, polyesters, polyvinyl chloride, polyvinylidene chloride, ethylene/vinyl alcohol copolymers in which the ethylene comonomer is present in an amount of less than 50% by weight, polyketones, and polyacrylonitrile.

14.  A blend of Claim 13 wherein the organic liquid and vapor barrier polymer is selected from poly(hexamethylene adipamide), poly( -caprolactam), poly(ethylene terephthalate), and poly(tetramethylene terephthalate).

15.  A blend of any one of Claims 11 to 14 which also contains up to about 10% of the total polymer weight of a finely ground filler.

16.  A blend of any one of/in which branching [Claims 11 to 15] or crosslinking of the organic liquid and vapor-permeable polymer is obtained by means of a coupling agent selected from free radical generating compounds and vulcanizing agents capable of reacting with pendant functional groups of the ethylene copolymer.

17.  A blend of Claim 16 wherein the coupling agent is a free radical generating compound selected from peroxides, peroxyacids, peroxyesters, and azo compounds.

18.  A blend of Claim 16 wherein the coupling agent is selected from sulfur, polysulfides, diamines, and diepoxides.

19.  An article melt-fabricated from a polymer blend of any one of Claims 11 to 18.

F I G.  1

F I G.   2